# EUROPÄISCHE PATENTSCHRIFT

(11) **EP 2 671 672 B1**
(45) Veröffentlichungstag und Bekanntmachung des Hinweises auf die Patenterteilung: **03.10.2018**
(21) Anmeldenummer: 13002771.7
(22) Anmeldetag: 29.05.2013
(51) Int. Cl.: B23P 9/02, B21D 39/20, C21D 7/12

(54) **Aufnahmevorrichtung zur Aufnahme eines Dorns und einer Hülse eines Umformwerkzeuges zum Aufweiten einer Öffnung**
Holder device for holding a mandrel and a sleeve of a forming tool for expanding a hole
Dispositif de préhension pour la préhension d'un mandrin et d'une douille d'un outil de formage pour l'élargissement d'un trou

(30) Priorität: 04.06.2012 DE 102012010917
(43) Veröffentlichungstag der Anmeldung: 11.12.2013
(73) Patentinhaber: Airbus Defence and Space GmbH, 85521 Ottobrunn (DE)
(72) Erfinder: Reese, Eggert, 85667 Oberpframmern (DE); Hauser, Ronald, 80687 München (DE)
(74) Vertreter: Kastel, Stefan

(56) Entgegenhaltungen:
- EP-A1- 0 581 385
- EP-A1- 1 525 952
- US-A- 4 423 619
- US-A- 5 613 395

## Beschreibung

Die Erfindung betrifft eine Aufnahmevorrichtung zur Aufnahme eines Dorns und einer Hülse eines Umformwerkzeugs zum Aufweiten einer Öffnung gemäß dem Oberbegriff des Anspruchs 1. Eine solche Aufnahmevorrichtung ist aus der US 5,305,627 bekannt.

Es ist bekannt, Öffnungen, insbesondere Bohrungen, in metallischen Bauteilen mithilfe eines Umformverfahrens aufzuweiten. Dies erfolgt zumeist im Wege der Kaltverformung. Infolge der plastischen Verformung des Materials entstehen im Umfeld der Bohrung Eigenspannungen, die zu einer deutlichen Verbesserung der Ermüdungsfestigkeit im Bereich der Bohrung beitragen. In der Luftfahrt werden insbesondere hochbelastete Montagebohrungen in dickwandigen metallischen Bauteilen aufgeweitet.

Es ist bekannt, zur Aufweitung von Bohrungen in dickwandigen Bauteilen Aufweitverfahren, die auch als Aufdornverfahren bezeichnet werden, wie das "Split Sleeve"- oder "Split Mandrel" -Verfahren zu verwenden. Bei "Split Sleeve" wird nach dem Einführen des Dorns der Bohrungsdurchmesser mittels einer Hülse reduziert, bei "Split Mandrel" wird der Dorn an der Spitze mittels eines Stiftes aufgekeilt; in beiden Fällen wird der Dorn, dessen Durchmesser nun größer ist als der Bohrungsdurchmesser, durch die Bohrung gezogen, wobei der Durchmesser der Bohrung über die Bauteildicke kontinuierlich vergrößert wird. Es hat sich jedoch gezeigt, dass das erzeugte Eigenspannungsfeld inhomogen ist und schon geringe Abweichungen von den Fertigungsmaßen von Bohrung und/oder Werkzeug, also deren Sollwerten, zu starken Schwankungen im Aufweitgrad führen. Beispielsweise eine Bohrung mit einem Durchmesser von 6 mm, die nominell um 4 % aufgeweitet wurde, kann im Ergebnis einen tatsächlichen Aufweitgrad zwischen 2,5 % und 4,9 % haben.

Insbesondere Hochleistungswerkstoffe mit stark richtungsabhängigen Eigenschaften, wie sie in der Luftfahrt verwendet werden, wie beispielsweise einige Aluminiumlegierungen, lassen sich mit den bekannten Aufdornverfahren nur in sehr geringem Maße aufweiten. Wie Untersuchungen gezeigt haben, beträgt der Aufweitgrad deutlich unter 3 %. Somit wird eine Verbesserung der Ermüdungsfestigkeit dadurch kaum erreicht. Ferner zeigen diese Werkstoffe für die Art der Beanspruchung während der konventionellen Aufdornverfahren eine stark eingeschränkte Umformfähigkeit und führen zu einer frühzeitigen Rissbildung.

Aus WO 2007/121932 A1 geht ein Umformwerkzeug hervor, mit dem eine Bohrung über die gesamte Wandstärke, das heißt Platten- bzw. Stapeldicke kontinuierlich aufgeweitet werden kann. Das Umformwerkzeug gewährleistet aufgrund seiner Krafteinleitung im Vergleich zu den konventionellen Aufdornverfahren einen günstigen mehrachsigen Spannungszustand. Hierdurch werden ein homogenes Dehnfeld und eine deutlich verbesserte Ermüdungsfestigkeit erreicht. Besonders vorteilhaft ist das Verfahren für Werkstoffe mit ausgeprägter Orthotropie, beispielsweise einige Aluminiumlegierungen, in denen Bohrungen rissfrei aufgeweitet werden können. Die Bohrungen können hierbei um bis zu 5 % ihres Ursprungsdurchmessers aufgeweitet werden.

Zur Aufnahme eines derartigen Umformwerkzeugs ist eine Aufnahmevorrichtung nötig.

Aus US 5,138,863 und US 5,305,627 gehen Aufnahmevorrichtungen zur Aufnahme eines Dorns und einer Hülse hervor. Hierbei ist die Hülse und der Dorn in dem Gehäuse aufgenommen und derart gelagert, dass der Dorn lediglich in Axialrichtung bewegbar und in die Hülse einführbar ist. Die Hülse ist starr in dem Gehäuse gelagert. Beiden Aufnahmevorrichtungen ist nachteilig, dass Dorn und Hülse unbeweglich zueinander gelagert sind, so dass eine Schädigung des Werkzeugs infolge eines Verkantens oder Verbiegens von Dorn und Hülse möglich ist. Somit kann ein störungsfreier Betrieb nicht sicher gewährleistet werden.

In US 4,423,619 A ist ein Umformwerkzeug zum Aufweiten einer Öffnung mittels eines Dorns und einer Hülse offenbart. Die Hülse ist dazu zwischen zwei verschwenkbaren und radial bewegbaren Haltebacken aufgenommen, welche die Hülse in Axialrichtung starr lagern. Der Dorn ist innerhalb des Gehäuses in einen Adapter derart eingeschraubt, dass dieser nur in Axialrichtung relativ zu dem Gehäuse und der Hülse bewegbar ist.

In EP 1 525 952 A1 ist ein Umformwerkzeug zum Aufweiten einer Öffnung im Split-Sleeve-Verfahren offenbart. Der Dorn ist dabei in einem Adapter derart gelagert, dass dieser nur in Axialrichtung relativ zu der Hülse und einem Gehäuse bewegbar ist. Die Hülse selbst ist starr gelagert.

In EP 0 581 358 A1 geht ein Umformwerkzeug zum Aufweiten einer Öffnung mittels eines Dorns und einer Hülse hervor. Die Hülse ist dazu in einer Hülsenaufnahme frei beweglich aufgenommen. Der Dorn wiederrum ist innerhalb eines Gehäuses endseitig in eine Aufnahme eines Kolbens eingeschraubt und relativ zu der Hülse und dem Gehäuse nur in Axialrichtung bewegbar ist.

Der Erfindung liegt daher die **Aufgabe** zugrunde, eine Aufnahmevorrichtung bereitzustellen, die eine Aufnahme eines Umformwerkzeuges zur Verfügung stellt, die einen verschleißarmen und störungsfreien Betrieb gewährleistet.

Diese Aufgabe wird durch eine Aufnahmevorrichtung gemäß Anspruch 1 **gelöst.**

Vorteilhafte Ausgestaltungen sind Gegenstand der Unteransprüche.

Gemäß einem Aspekt der Erfindung ist eine Aufnahmevorrichtung zur Aufnahme eines Dorns und einer Hülse eines Umformwerkzeugs zum Aufweiten einer Öffnung mit einem Gehäuse versehen, das eine Dornaufnahme und eine Hülsenaufnahme aufweist. Die Dornaufnahme ist in Axialrichtung verschiebbar. Die Dornaufnahme und die Hülsenaufnahme sind zur derartigen Aufnahme von Dorn bzw. Hülse in dem Gehäuse ausgebildet, dass die Mittelachsen von Dorn und Hülse im Wesentlichen koaxial zueinander ausgerichtet sind, so dass der Dorn in die Hülse einführbar ist. Die Dornaufnahme und die Hülsenaufnahme sind derart ausgebildet, dass der Dorn und die Hülse schwimmend gelagert und relativ zueinander und zu dem Gehäuse in axialer und radialer Richtung bewegbar sind, um so eine Selbstzentrierung von Dorn und Hülse zu ermöglichen.

Eine solche Aufnahmevorrichtung zeichnet sich durch die bewegliche Lagerung von Dorn und Hülse zueinander sowie jeweils zu dem Gehäuse aus. Diese schwimmende Lagerung ermöglicht eine Selbstzentrierung von Dorn und Hülse. Hierdurch können Fertigungstoleranzen von der Öffnung und/oder dem Umformwerkzeug und/oder Ausrichtungsungenauigkeiten ausgeglichen werden, so dass eine auftretende Biegebeanspruchung vermieden wird. Folglich wird eine Schädigung des Umformwerkzeugs durch Verkanten oder Verbiegen vermieden. Eine Zentrierung zu der aufzuweitenden Öffnung ermöglicht eine zum Aufweiten vorteilhafte kontinuierliche Kraftübertragung.

Ferner ist es von Vorteil, wenn die Hülse mehrere Hülsenelemente aufweist, die relativ zueinander in Radialrichtung verschiebbar sind, wobei jedes der Hülsenelemente flexibel gelagert ist.

Vorzugsweise weist die Hülsenaufnahme wenigstens ein elastisches Ausgleichselement auf.

Weiter bevorzugt weist die Dornaufnahme wenigstens ein Gleitlager und/oder wenigstens ein elastisches Ausgleichselement auf.

Die Ausgleichselemente und/oder das Gleitlager ermöglichen eine vorteilhafte Selbstzentrierung von Dorn und Hülse, so dass ein Verkanten und Verbiegen vermieden wird.

Des Weiteren ist es von Vorteil, als elastisches Ausgleichselement eine Feder und/oder eine Tellerfeder vorzusehen.

Zudem kann das Gleitlager zwei Halbkugelelemente aufweisen. Hierbei ist es von Vorteil, wenn der Dorn auf einem Halbkugelelement gelagert ist, um eine Ausrichtung in axialer Richtung während der Belastungsphase zu ermöglichen.

In einer vorteilhaften Ausgestaltung ist in einem Gehäuse eine Schmierkammer ausgebildet, innerhalb der die Hülse, die Hülsenaufnahme und wenigstens ein Abschnitt des Dorns aufnehmbar sind. Hierdurch wird eine kontinuierliche Schmierung der zusammenwirkenden Flächen von Dorn und Hülse ermöglicht, so dass die zum Aufweiten aufzubringende Kraft verringert wird. Ferner wird der Verschleiß von Dorn und Hülse reduziert.

Weiterhin bevorzugt ist die Schmierkammer über einen in Radialrichtung nach außen führenden Schmierkanal zugänglich, wobei der Schmierkanal durch einen Schmiernippel verschlossen ist. Der Schmierstoff kann somit seitlich über dem Schmiernippel kontinuierlich zugeführt werden, so dass eine einfach zu handhabende Befüllung der Schmierkammer mit Schmiermittel möglich ist.

Vorzugsweise ist die Schmierkammer über einen im Gehäuse eingebrachten Anschlag, der als Anschlag für die Hülse während eines Zurückfahrens des Dorns dient, verschlossen, wobei in dem Anschlag eine Öffnung zum Hindurchführen des Dorns eingebracht ist. Der Anschlag kann als eine in das Gehäuse eingesetzte Scheibe ausgebildet sein. Beispielsweise kann die Scheibe in das Gehäuse eingeschraubt oder eingeklemmt sein. Der Anschlag verhindert während des Herausziehens des Dorns aus der Hülse eine Verschiebung der Hülse in axialer Richtung. Ferner kann in die Scheibe eine Nut eingebracht sein, die mit der Schmierkammer und dem Schmierkanal verbunden ist, so dass vorteilhaft eine Versorgung der Schmierkammer mit Schmiermittel über die Scheibe erfolgt. Des Weiteren kann ein Ende des Dorns in die Schmierkammer über ein in die Scheibe eingebrachte Öffnung in die Schmierkammer hineinragen, so dass eine kontinuierliche Schmierung des Dorns erfolgt und dieser gleichzeitig als Verschlusselement für die Schmierkammer dient.

Bevorzugt ist der Anschlag als eine in dem Gehäuse eingeschraubte Scheibe ausgebildet. Hierdurch wird eine einfache Zugänglichkeit zu der Hülse, dem elastischen Ausgleichselement und der Schmierkammer gewährleistet.

Bevorzugt sind der Dorn und die Dornaufnahme in einer Überwurfmutterkonstruktion angeordnet, wobei die Überwurfmutter mit dem Gehäuse verbunden ist. Mittels der Überwurfmutterkonstruktion ist es möglich, den Dorn vorteilhaft an einem Kolben eines Hydraulikzylinders zu befestigen.
Vorzugweise weist das Gehäuse ein erstes Gehäuseteil und ein zweites Gehäuseteil auf, wobei der Dorn und die Dornaufnahme in dem ersten Gehäuseteil und die Hülse und die Hülsenaufnahme in dem zweiten Gehäuseteil angeordnet sind.

Vorzugsweise weisen das erste Gehäuseteil und das zweite Gehäuseteil jeweils ein Gewinde auf, die ineinander eingreifen, so dass die beiden Gehäuseteile relativ zueinander verdrehbar sind. Infolge der relativen Verdrehbarkeit und der damit einhergehenden axialen Verschiebung der beiden Gehäuseteile zueinander, kann der Weg des Dorns relativ zu der Hülse verkürzt oder verlängert werden. Da die radiale Verschiebung der Hülsenelemente von der Einführtiefe des Dorns abhängt, ist es somit möglich, die radiale Verschiebung der Hülsenelemente und damit den Aufweitgrad der Bohrung zu steuern. Ferner ist es möglich eines der beiden Gehäuseteile einfach auszutauschen. Zudem wird die Zugänglichkeit zu der Scheibe bzw. der Schmierkammer erleichtert.

Vorteilhafterweise ist an einem der Gehäuseteile eine Arretiervorrichtung angeordnet, die die Gehäuseteile gegeneinander festlegt.

Weiterhin bevorzugt weist die Arretiervorrichtung einen Arretierstift auf, der in eine an einem der Gehäuseteile ausgebildete Einrasteinrichtung eingreift, um so eine relative Verdrehung der Gehäuseteile zueinander zu verhindern.

Der Stift kann seitlich eingebracht sein und in Aussparungen, die in einem der Gehäuseteile eingebracht sind, eingreifen.

Vorteilhaft ist es, wenn der Stift in Stufen einrastet, so dass eine schrittweise Verdrehung und eine damit einhergehende schrittweise Verschiebung des ersten Gehäuseteils zu dem zweiten Gehäuseteil, beispielsweise in 0,2 mm Schritten, in axialer Richtung ermöglicht wird. Zudem stellen die Arretiervorrichtung und die Einrastvorrichtung eine kostengünstige Möglichkeit zur Feinjustierung des Aufweitgrads dar.

In einer vorteilhaften Ausgestaltung ist die Schmierkammer gegenüber dem Gehäuse mittels Dichtmittel abgedichtet, wobei wenigstens ein Dichtmittel zwischen dem Anschlag und dem Dorn angeordnet ist und wobei wenigstens ein Dichtmittel zwischen dem Gehäuse und der Hülse angeordnet ist. Als Dichtmittel können hierfür Gummiringe verwendet werden.

Weiterhin bevorzugt ist die Aufnahmevorrichtung an einen Hydraulikzylinder anschließbar, wobei ein Kolben des Hydraulikzylinders mit dem Dorn verbindbar ist und in der Überwurfmutter geführt ist, so dass der Dorn in Axialrichtung beweglich ist. Vorteilhaft ist der Dorn über die Überwurfmutter mit dem Kolben des Hydraulikzylinders verbunden.

Vorteilhafterweise ist der Hydraulikzylinder doppelwirkend ausgeführt, das heißt, er kann sowohl Druck- als auch Zugkräfte übertragen. Infolge der Anbindung mittels einer Überwurfmutterkonstruktion ist eine einfache und wartungsfreundliche Verbindung mit einer Kraftquelle gewährleistet. Zudem kann der Aufweitgrad auch über den Weg des Kolbens kontrolliert werden. Dies kann entweder über einen Anschlag im Hydraulikzylinder oder über einen Anschlag in der Aufnahmevorrichtung geregelt werden.

Ferner zeichnet sich die hier beschriebene Aufnahmevorrichtung durch ihr geringes Gewicht aus. Dies wird durch die kompakte Bauweise der Aufnahmevorrichtung erreicht. Beispielsweise kann die Aufnahmevorrichtung aus einem hochfesten Werkstoff, wie beispielsweise Chrom-Nickel-Molybdän-Stahl gefertigt sein. Für die Aufweitung von Bohrungen mit einem Durchmesser von 6 mm beträgt das Gewicht der gesamten Einheit, umfassend einen Hydraulikzylinder, einen Dorn, eine Hülse und die erfindungsgemäße Aufnahmevorrichtung weniger als 3 kg. Hierdurch ist es möglich, die Aufnahmevorrichtung für den Handbetrieb zu verwenden.

Im Folgenden wird die Erfindung anhand der beigefügten Zeichnungen näher erläutert. Dabei zeigen:
- Fig. 1: einen Längsschnitt durch eine Aufnahmevorrichtung gemäß einer ersten Ausführungsform und
- Fig. 2: eine perspektivische Ansicht eines Längsschnitts durch eine Aufnahmevorrichtung gemäß einer zweiten Ausführungsform.

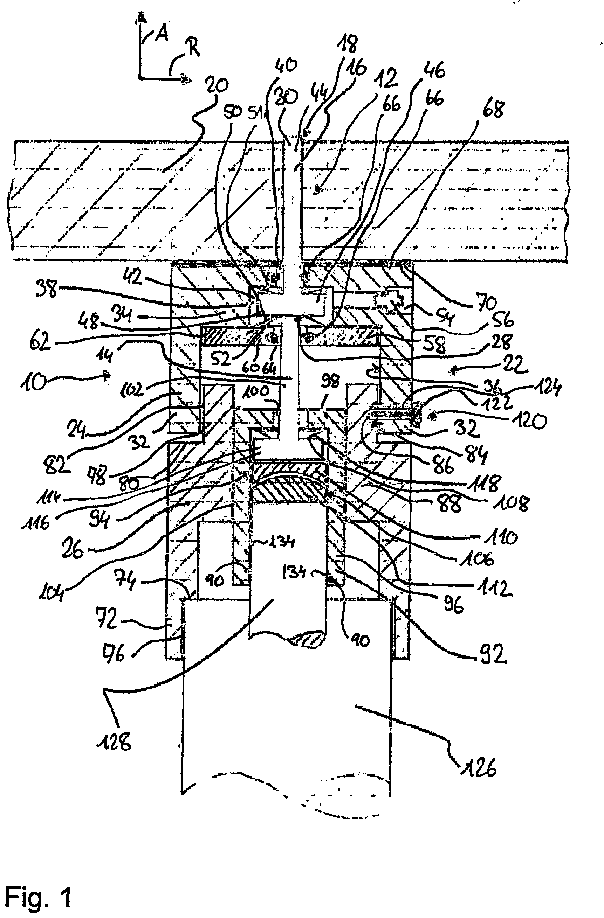

In Fig. 1 ist ein möglicher prinzipieller Aufbau einer Aufnahmevorrichtung 10 zur Aufnahme eines Dorns 14 und einer Hülse 16 eines Umformwerkzeugs 12 zum Aufweiten einer Öffnung 18 dargestellt. Hierbei liegt die Aufnahmevorrichtung 10 an einem Werkstück 20 an, wobei die Hülse 16 in die Öffnung 18 eingeführt ist.

Die Aufnahmevorrichtung 10 weist ein Gehäuse 22 auf, das ein erstes Gehäuseteil 24 und ein zweites Gehäuseteil 26 umfasst. Innerhalb des Gehäuses 22 sind Dorn 14 und Hülse 16 koaxial zueinander ausgerichtet, wobei der Dorn 14 in Axialrichtung A bewegbar und in ein Innenloch 28 der Hülse 16 einführbar ist. Die Hülse 16 weist mehrere Hülsenelemente 30 auf, die relativ zueinander in Radialrichtung R verschiebbar sind, wobei die radiale Verschiebung der Hülsenelemente 30 von der Eindringtiefe des Dorn 14 in das Innenloch 28 abhängt. Je weiter der Dorn 14 in das Innenloch 28 eingeführt wird, desto größer ist die radiale Verschiebung der Hülsenelemente 30.

Das erste Gehäuseteil 24 ist als einseitig geschlossener Zylinder ausgebildet, der eine Seitenwand 32 und einen Basis 34 aufweist. Ferner weist die Seitenwand 32 an ihrer Innenseite ein Innengewinde 36 auf. In der Basis 34 ist eine Aufnahmekammer 38 ausgebildet, die über einen in Axialrichtung A nach aussen führenden Durchgang 40 mit der Umgebung verbunden ist.

In der Aufnahmekammer 38 ist die Hülse 16 mittels einer Hülsenaufnahme 42 aufgenommen, wobei ein erster Abschnitt 44 der Hülse 16 über den Durchgang 40 aus dem ersten Gehäuseteil 24 herausragt. Ferner ist ein zweiter Abschnitt 46 der Hülse 16 näherungsweise als Flansch 48 ausgebildet. Die Hülsenaufnahme 42 weist zwei elastische Ausgleichselemente 50 in Form von Tellerfedern 51 auf, die sich in Axialrichtung A gesehen ober- und unterhalb an dem Flansch 48 der Hülse 16 abstützen und jeweils mit dem ersten Gehäuseteil 24 verbunden sind. Diese Anordnung erlaubt eine Bewegung der Hülse 16 sowohl in Axialrichtung A als auch in Radialrichtung R. Zudem ist es auch denkbar als elastische Ausgleichselemente 50 Federn bzw. eine Kombination von Federn und Tellerfedern 51 zu verwenden.

Die Aufnahmekammer 38 ist zudem als Schmierkammer 52 ausgebildet, die über einen in Radialrichtung R nach außen führenden Schmierkanal 54 zugänglich ist. Der Schmierkanal 54 ist mittels einer Schmierbuchse 56 verschlossen. Zudem ist es auch denkbar, dass der Schmierkanal 54 durch einen Schmiernippel verschlossen ist.

Die Schmierkammer 52 ist über einen Anschlag 58 verschlossen, wobei der Anschlag 58 als Scheibe 60 ausgebildet ist. Der Anschlag 58 dient zudem beim Herausziehen des Dorns 14 aus der Hülse 16 als Anschlag für die Hülse 16. Die Scheibe 60 weist an ihrer Umfangsfläche ein Aussengewinde 62 auf, das in das Innengewinde 36 des ersten Gehäuseteils 24 eingreift. Somit ist die Scheibe 60 in das erste Gehäuseteil 24 eingeschraubt. Des Weiteren ist in der Scheibe 60 eine Öffnung 64 ausgebildet, über die der Dorn 14 in die Schmierkammer 52 und in die Hülse 16 bzw. dessen Innenloch 28 einführbar ist.

Zwischen dem Durchgang 40 des ersten Gehäuseteils 24 und der Hülse 16 sowie der Öffnung 64 der Scheibe 60 und dem Dorn 14 ist jeweils ein Dichtmittel 66 in Form eines Dichtrings zum Abdichten der Schmierkammer 52 angeordnet.

Die dem Werkstück 20 zugewandte Seite der Basis 34 ist als Auflagefläche 68 ausgebildet, mittels der die Aufnahmevorrichtung 10 an dem Werkstück 20 anliegt. Ferner ist zum Schutz des Werkstücks 20 auf der Auflagefläche 68 ein Auflageelement 70 aufgebracht. Im vorliegenden Fall handelt es sich hierbei um eine Gummischicht, wobei auch jede andere Schicht, die zum Schutz des Werkstücks 20 dient, denkbar ist.

Das zweite Gehäuseteil 26 ist näherungsweise zylinderförmig ausgebildet, wobei es an einem ersten Ende 72 einen ersten umlaufenden Absatz 74 aufweist, der an seiner Innenseite ein Innengewinde 76 umfasst. An einem zweiten Ende 78 weist das zweite Gehäuseteil 26 einen zweiten umlaufende Absatz 80 auf, der an seiner Aussenseite mit einem Aussengewinde 82 versehen ist. Ferner umfasst der zweite Absatz 80 eine Einrasteinrichtung 84, die aus voneinander beabstandeten in Umfangsrichtung angeordneten Ausnehmungen 86 gebildet ist.

Im zweiten Gehäuseteil 26 ist eine Überwurfmutter 92 angeordnet. Die Überwurfmutter 92 ist als einseitig geschlossener Zylinder ausgebildet und weist eine Seitenwand 96 und einen Basis 98 auf. In die Basis 98 ist eine Öffnung 100 eingebracht, durch die ein erster Abschnitt 102 des Dorns 14 hindurchgeführt ist. Die Überwurfmutter 92 weist an ihrem unteren Ende ein Innengewinde 90 auf, das in ein Außengewinde 134 des Kolbens 128 eingreift. Die Überwurfmutter 92 wird im mittleren Bereich 88 des zweiten Gehäuseteils 26 geführt, wenn sich der Kolben 128 während des Aufweitens in axialer Richtung bewegt. In der Überwurfmutter 92 ist eine Dornaufnahme 94 zur Lagerung des Dorns 14 angeordnet. Die Überwurfmutter 92 ist derart in dem zweiten Gehäuseteil 26 angeordnet, dass ihre Basis 98 in Axialrichtung A dem Anschlag 58 zugewandt ist.

Die Dornaufnahme 94 weist ein Gleitlager 106 und ein elastisches Ausgleichselement 108 auf. Das Gleitlager 106 ist aus einem ersten Halbkugelelement 110 und einem zweiten Halbkugelelement 112 gebildet, wobei das erste Halbkugelelement 110 mit dem Dorn 14, insbesondere mit einem an einem zweiten Abschnitt 114 des Dorns 14 gebildeten Flansch 116 verbunden ist. Das elastische Ausgleichselement 108 ist als Tellerfeder 118 ausgebildet, wobei die Tellerfeder 118 mit der Überwurfmutter 92 und mit dem Flansch 116 des Dorns 14 verbunden ist. Die Dornaufnahme 94 gewährleistet eine axiale und radiale Bewegbarkeit des Dorns 14 zu der Hülse 16 und dem zweiten Gehäuseteil 26.

Das erste Gehäuseteil 24 ist mit seinem Innengewinde 36 mit dem zweiten Gehäuseteil 26 über dessen Aussengewinde 82 verbunden. Hierdurch wird eine relative Verdrehbarkeit der beiden Gehäuseteile 24, 26 zueinander gewährleistet. Mittels einer Arretiervorrichtung 120 werden die beiden Gehäuseteile 24, 26 zueinander fixiert. Die Arretiervorrichtung 120 weist die in das zweite Gehäuseteil 26 eingebrachte Einrasteinrichtung 84 sowie einen Arretierstift 122, der über einen in das erste Gehäuseteil 24 eingebrachten Durchbruch 124 in die Einrasteinrichtung 84 bzw. die Ausnehmungen 86 eingreift. Die Ausnehmungen 86 sind in Umfangsrichtung derart voneinander beabstandet, dass eine schrittweise Verdrehung des ersten Gehäuseteils 24 zu dem zweiten Gehäuseteil 26 bzw. eine schrittweise Verschiebung in Axialrichtung möglich ist. Beispielsweise kann eine schrittweise Verschiebung in 0,2 mm Schritten erfolgen. Durch die Verschiebung des ersten Gehäuseteils 24 in Axialrichtung ist es möglich, den Weg des Dorns 14 relativ zu der Hülse 16 zu verkürzen oder zu verlängern. Hierdurch lässt sich die radiale Verschiebung der Hülsenelemente 30 und damit der Aufweitgrad steuern.

Die Aufnahmevorrichtung 10 ist an einen Hydraulikzylinder 126 anschließbar. Hierbei ist der erste Absatz 74 über das Innengwinde 76 mit dem Hydraulikzylinder 126 verschraubt. Die Überwurfmutter 92 ist mit dem Innengewinde 90 auf das Aussengewinde 134 des Kolbens 128 geschraubt und umschließt das Halbkugelelement 112, welches an dem Kolben anliegt, das Halbkugelelement 110, welches an dem Halbkugelelement 112 anliegt, den Flansch 116 des Dorns 14, welcher an dem Halbkugelelement 110 anliegt, und die Tellerfeder 118, die zwischen Flansch 116 und Basis 98 angeordnet ist. Der Hydraulikzylinder 126 kann sowohl Druck- als auch Zugkräfte übertragen, so dass der Dorn 14 einerseits in die Hülse 16 geschoben wird und andererseits aus der Hülse 16 wieder herausgezogen werden kann.

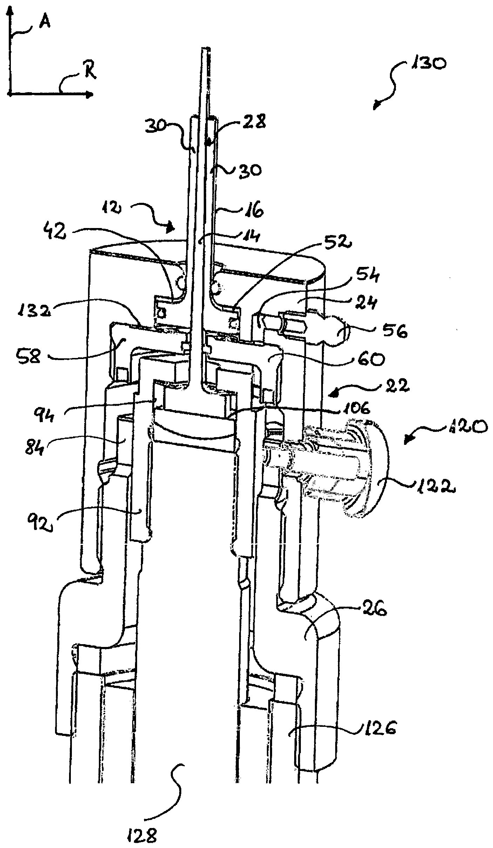

In Fig. 2 ist eine zweite Ausführungsform der erfindungsgemäßen Aufnahmevorrichtung 130 dargestellt, wobei für gleiche und funktionsgleiche Teile die selben Bezugszeichen verwendet werden. Die zweite Ausführungsform unterscheidet sich von der ersten Ausführungsform dadurch, dass der Schmierkanal 54 als eine Nut 132 in der Scheibe 60 ausgebildet ist. Ferner ist das Aussengewinde 82, in das das Innengewinde 36 des ersten Gehäuseteils 24 eingreift, in dem mittleren Bereich 88 des zweiten Gehäuseteils 26 angeordnet.

Die hier beschriebene Aufnahmevorrichtung 10, 130 zeichnet sich durch die schwimmende Lagerung von Dorn 14 und Hülse 16 aus. Hierdurch wird eine Selbstzentrierung des Dorns 14 und der Hülse 16 erreicht, so dass eine Schädigung des Umformwerkzeuges 12 durch Verkanten oder Verbiegen vermieden wird. Ferner ermöglicht die Schmierkammer 52 eine kontinuierliche Schmierung der Funktionsflächen von Dorn 14 und Hülse 16. Zudem kann über die Arretiervorrichtung 120 eine Feinjustierung des Aufweitgrads der Öffnung 18 erreicht werden. Darüber hinaus gewährleistet die Aufnahmevorrichtung 10, 130 eine einfache und wartungsfreundliche Anbindung an eine Kraftquelle in Form eines Hydraulikzylinders 126. Schließlich zeichnet sich die Aufnahmevorrichtung 10, 130 durch ihre kompakte Bauweise und ihr geringes Eigengewicht aus.

### Bezugszeichenliste

- 10: Aufnahmevorrichtung
- 12: Umformwerkzeug
- 14: Dorn
- 16: Hülse
- 18: Öffnung
- 20: Werkstück
- 22: Gehäuse
- 24: erstes Gehäuseteil
- 26: zweites Gehäuseteil
- 28: Innenloch
- 30: Hülsenelement
- 32: Seitenwand
- 34: Basis
- 36: Innengewinde
- 38: Aufnahmekammer
- 40: Durchgang
- 42: Hülsenaufnahme
- 44: erster Abschnitt
- 46: zweiter Abschnitt
- 48: Flansch
- 50: elastisches Ausgleichselement
- 51: Tellerfeder
- 52: Schmierkammer
- 54: Schmierkanal
- 56: Schmierbuchse
- 58: Anschlag
- 60: Scheibe
- 62: Aussengewinde
- 64: Öffnung
- 66: Dichtmittel
- 68: Auflagefläche
- 70: Auflageelement
- 72: erstes Ende
- 74: erster Absatz
- 76: Innengewinde
- 78: zweites Ende
- 80: zweiter Absatz
- 82: Aussengewinde
- 84: Einrasteinrichtung
- 86: Ausnehmung
- 88: mittlerer Bereich
- 90: Innengewinde
- 92: Überwurfmutter
- 94: Dornaufnahme
- 96: Seitenwand
- 98: Basis
- 100: Öffnung
- 102: erster Abschnitt
- 104: Aussengewinde
- 106: Gleitlager
- 108: elastisches Ausgleichselement
- 110: erstes Halbkugelelement
- 112: zweites Halbkugelelement
- 114: zweiter Abschnitt
- 116: Flansch
- 118: Tellerfeder
- 120: Arretiervorrichtung
- 122: Arretierstift
- 124: Durchbruch
- 126: Hydraulikzylinder
- 128: Kolben
- 130: Aufnahmevorrichtung
- 132: Nut
- 134: Aussengewinde des Kolbens

- A: Axialrichtung
- R: Radialrichtung

## Patentansprüche

1. Aufnahmevorrichtung (10, 130) zur Aufnahme eines Dorns (14) und einer Hülse (16) eines Umformwerkzeuges (12) zum Aufweiten einer Öffnung (18), wobei die Aufnahmevorrichtung (10, 130) mit einem Gehäuse (22) versehen ist, das eine Dornaufnahme (94) und eine Hülsenaufnahme (42) aufweist, wobei die Dornaufnahme (94) in Axialrichtung (A) verschiebbar ist, und wobei die Dornaufnahme (94) und die Hülsenaufnahme (42) zur derartigen Aufnahme von Dorn (14) bzw. Hülse (16) in dem Gehäuse (22) ausgebildet sind, dass die Mittelachsen von Dorn (14) und Hülse (16) im Wesentlichen koaxial zueinander ausgerichtet sind, so dass der Dorn (14) in die Hülse (16) einführbar ist, **dadurch gekennzeichnet, dass** die Dornaufnahme (94) und die Hülsenaufnahme (42) derart ausgebildet sind, dass der Dorn (14) und die Hülse (16) schwimmend gelagert und relativ zueinander und zu dem Gehäuse (22) in axialer und radialer Richtung bewegbar sind, um so eine Selbstzentrierung von Dorn (14) und Hülse (16) zu ermöglichen.

2. Aufnahmevorrichtung nach Anspruch 1, **dadurch gekennzeichnet, dass** die Hülsenaufnahme (42) wenigstens ein elastisches Ausgleichselement (50) aufweist.

3. Aufnahmevorrichtung nach einem der Ansprüche 1 oder 2, **dadurch gekennzeichnet, dass** die Dornaufnahme (94) wenigstens ein Gleitlager (106) und/oder wenigstens ein elastisches Ausgleichselement (108) aufweist.

4. Aufnahmevorrichtung nach Anspruch 3, **dadurch gekennzeichnet, dass** das Gleitlager (106) zwei Halbkugelelemente (110, 112) aufweist.

5. Aufnahmevorrichtung nach einem der vorhergehenden Ansprüche, **dadurch gekennzeichnet, dass** in dem Gehäuse (22) eine Schmierkammer (52) ausgebildet ist, innerhalb der die Hülse (16), die Hülsenaufnahme (42) und wenigstens ein Abschnitt des Dorns (14) aufnehmbar sind.

6. Aufnahmevorrichtung nach Anspruch 5, **dadurch gekennzeichnet, dass** die Schmierkammer (52) über einen in Radialrichtung (R) nach außen führenden Schmierkanal (54) zugänglich ist, wobei der Schmierkanal (54) durch einen Schmiernippel (56) verschlossen ist.

7. Aufnahmevorrichtung nach einem der Ansprüche 5 oder 6, **dadurch gekennzeichnet, dass** die Schmierkammer (52) über einen in dem Gehäuse (22) eingebrachten Anschlag (58), der als Anschlag für die Hülse (16) während eines Zurückfahrens des Dorns (14) dient, verschlossen ist, wobei in dem Anschlag (58) eine Öffnung (64) zum Hindurchführen des Dorns (14) eingebracht ist.

8. Aufnahmevorrichtung nach Anspruch 7, **dadurch gekennzeichnet, dass** der Anschlag (58) als eine in dem Gehäuse (22) eingesetzte Scheibe (60) ausgebildet ist.

9. Aufnahmevorrichtung nach einem der vorhergehenden Ansprüche, **dadurch gekennzeichnet, dass** der Dorn (14) und die Dornaufnahme (94) in einer Überwurfmutter-Konstruktion (92) angeordnet sind.

10. Aufnahmevorrichtung nach einem der vorhergehenden Ansprüche, **dadurch gekennzeichnet, dass** das Gehäuse (22) ein erstes Gehäuseteil (24) und ein zweites Gehäuseteil (26) aufweist, wobei die Dornaufnahme (94) in dem zweiten Gehäuseteil (26) die Hülse (16) und die Hülsenaufnahme (42) in dem ersten Gehäuseteil (24) angeordnet sind.

11. Aufnahmevorrichtung nach Anspruch 10, **dadurch gekennzeichnet, dass** das erste Gehäuseteil (24) und das zweite Gehäuseteil (26) jeweils ein Gewinde (36, 82) aufweisen, die ineinander eingreifen, so dass die beiden Gehäuseteile (24, 26) relativ zueinander verdrehbar sind.

12. Aufnahmevorrichtung nach einem der Ansprüche 10 oder 11, **dadurch gekennzeichnet, dass** an einem der Gehäuseteile (24, 26) eine Arretiervorrichtung (120) angeordnet ist, die die Gehäuseteile (24, 26) gegeneinander festlegt.

13. Aufnahmevorrichtung nach Anspruch 12, **dadurch gekennzeichnet, dass** die Arretiervorrichtung (120) einen Arretierstift (122) aufweist, der in eine an einem der Gehäuseteile (24, 26) ausgebildete Einrasteinrichtung (84) eingreift, um so eine relative Verdrehung der Gehäuseteile (24, 26) zueinander zu verhindern.

14. Aufnahmevorrichtung nach einem der Ansprüche 5 bis 13, **dadurch gekennzeichnet, dass** die Schmierkammer (52) gegenüber dem Gehäuse (22) mittels Dichtmitteln (66) abgedichtet ist, wobei wenigstens ein Dichtmittel (66) zwischen dem Anschlag (58) und dem Dorn (14) angeordnet ist und wobei wenigstens ein Dichtmittel (66) zwischen dem Gehäuse (22) und der Hülse (16) angeordnet ist.

15. Aufnahmevorrichtung nach einem der vorhergehenden Ansprüche, **dadurch gekennzeichnet, dass** die Aufnahmevorrichtung (10, 130) an einen Hydraulikzylinder (126) anschließbar ist, wobei ein Kolben (128) des Hydraulikzylinders (126) mit dem Dorn (14) mittels der Überwurfmutter (92) verbunden ist, so dass der Dorn (14) in Axialrichtung (A) beweglich ist.

## Claims

1. Holder device (10, 130) for holding a mandrel (14) and a sleeve (16) of a forming tool (12) for expanding a hole (18), wherein the holder device (10, 130) is provided with a housing (22) having a mandrel receptacle (94) and a sleeve receptacle (42), wherein the mandrel receptacle (94) is displaceable in the axial direction (A) and wherein the mandrel receptacle (94) and the sleeve receptacle (42) are designed for receiving the mandrel (14) or the sleeve (16) in the housing (22) in such a manner that the central axes of the mandrel (14) and the sleeve (16) are substantially coaxially aligned to each other so that the mandrel (14) can be inserted into the sleeve (16), **characterized in that** the mandrel receptacle (94) and the sleeve receptacle (42) are so formed that the mandrel (14) and the sleeve (16) are floatingly supported and are movable relative to each other and to the housing (22) in the axial and radial directions, to enable self-centering of the mandrel (14) and the sleeve (16) in this way.

2. Holder device according to claim 1, **characterized in that** the sleeve receptacle (42) at least has an elastic compensating element (50).

3. Holder device according to one of the claims 1 or 2, **characterized in that** the mandrel receptacle (94) at least has a sliding bearing (106) and/or at least an elastic compensation element (108).

4. Holder device according to claim 3, **characterized in that** the sliding bearing (106) comprises two semispherical elements (110, 112).

5. Holder device according to one of the preceding claims, **characterized in that** a lubrication chamber (52) is formed in the housing, within which the sleeve (16), the sleeve receptacle (42) and at least a portion of the mandrel (14) can be accommodated.

6. Holder device according to claim 5, **characterized in that** the lubrication chamber (52) is accessible through a lubrication channel (54) leading outwards in a radial direction (R), the lubrication channel (54) being closed by a lubrication nipple (56).

7. Holder device according to one of the claims 5 or 6, **characterized in that** the lubrication chamber (52) is closed by a stop (58) fitted in the housing (22) and serving as a stop for the sleeve (16) during a retraction of the mandrel (14), an opening (64) for passing the mandrel (14) through being formed in the stop (58).

8. Holder device according to claim 7, **characterized in that** the stop (58) is designed as a disc (60) inserted in the housing (22).

9. Holder device according to one of the preceding claims, **characterized in that** the mandrel (14) and the mandrel receptacle (94) are arranged in a cap nut design (92).

10. Holder device according to one of the preceding claims, **characterized in that** the housing (22) has a first housing part (24) and a second housing part (26), the mandrel receptacle (94) being arranged within the second housing part (26) and the sleeve (16) and the sleeve receptacle (42) being arranged within the first housing part (24).

11. Holder device according to claim 10, **characterized in that** the first housing part (24) and the second housing part (26) each have a thread (36, 82) engaging each other so that both housing parts (24, 26) are rotatable relative to each other.

12. Holder device according to one of the claims 10 or 11, **characterized in that** a locking device (120) is disposed on one of the housing parts (24, 26), which fixes the housing parts (24, 26) against each other.

13. Holder device according to claim 12, **characterized in that** the locking device (120) comprises a locking pin (122) which engages with a snap-in device (84) formed on one of the housing parts (24, 26) to prevent relative twisting of the housing parts (24, 26) to each other in this way.

14. Holder device according to one of the claims 5 to 13, **characterized in that** the lubrication chamber (52) is sealed against the housing (22) by sealing means (66), at least one sealing means (66) being disposed between the stop (58) and the mandrel (14) and at least one sealing means (66) being disposed between the housing (22) and the sleeve (16).

15. Holder device according to one of the preceding claims, **characterized in that** the holder device (10, 130) can be connected to a hydraulic cylinder (126), a piston (128) of the hydraulic cylinder (126) being connected to the mandrel (14) by means of the cap nut (92) so that the mandrel (14) is movable in the axial direction (A).

## Revendications

1. Dispositif de réception (10, 130) pour recevoir un mandrin (14) et une douille (16) d'un outil de formage (12) pour élargir une ouverture (18), le dispositif de réception (10, 130) étant pourvu d'un boîtier (22) qui présente un élément récepteur de mandrin (94) et un élément récepteur de douille (42), l'élément récepteur de mandrin (94) étant déplaçable en direction axiale (A), et l'élément récepteur de mandrin (94) et l'élément récepteur de douille (42) étant réalisés de telle sorte pour la réception respective du mandrin (14) et de la douille (16) dans le boîtier (22) que les axes médians respectifs du mandrin (14) et de la douille (16) sont orientés de manière sensiblement coaxiale l'un par rapport à l'autre, de telle sorte que le mandrin (14) peut être introduit dans la douille (16), **caractérisé en ce que** l'élément récepteur de mandrin (94) et l'élément récepteur de douille (42) sont réalisés de telle sorte que le mandrin (14) et la douille (16) sont montés flottants et sont déplaçables l'un par rapport à l'autre et par rapport au boîtier (22) en direction axiale et radiale pour permettre ainsi un autocentrage du mandrin (14) et de la douille (16).

2. Dispositif de réception selon la revendication 1, **caractérisé en ce que** l'élément récepteur de douille (42) présente au moins un élément de compensation (50) élastique.

3. Dispositif de réception selon l'une des revendications 1 ou 2, **caractérisé en ce que** l'élément récepteur de mandrin (94) présente au moins un palier à glissement (106) et/ou au moins un élément de compensation (108) élastique.

4. Dispositif de réception selon la revendication 3, **caractérisé en ce que** le palier à glissement (106) présente deux éléments semi-sphériques (110, 112).

5. Dispositif de réception selon l'une des revendications précédentes, **caractérisé en ce que** dans le boîtier (22) est réalisée une chambre de lubrification (52) à l'intérieur de laquelle la douille (16), l'élément récepteur de douille (42) et au moins un segment du mandrin (14) peuvent être reçus.

6. Dispositif de réception selon la revendication 5, **caractérisé en ce que** la chambre de lubrification (52) est accessible via un canal de lubrification (54) menant en direction radiale (R) vers l'extérieur, le canal de lubrification (54) étant fermé par un graisseur (56).

7. Dispositif de réception selon la revendication 5 ou 6, **caractérisé en ce que** la chambre de lubrification (52) est fermée via une butée (58) ménagée dans le boîtier (22), qui sert de butée pour la douille (16) pendant un retour en arrière du mandrin (14), une ouverture (64) étant ménagée dans la butée (58) pour y faire passer le mandrin (14).

8. Dispositif de réception selon la revendication 7, **caractérisé en ce que** la butée (58) est réalisée sous forme de rondelle (60) insérée dans le boîtier (22).

9. Dispositif de réception selon l'une des revendications précédentes, **caractérisé en ce que** le mandrin (14) et l'élément récepteur de mandrin (94) sont agencés dans une construction d'écrou raccord (92).

10. Dispositif de réception selon l'une des revendications précédentes, **caractérisé en ce que** le boîtier (22) présente une première partie de boîtier (24) et une deuxième partie de boîtier (26), l'élément récepteur de mandrin (94) étant agencé dans la deuxième partie de boîtier (26), et la douille et l'élément récepteur de douille (42) sont agencés dans la première partie de boîtier (24).

11. Dispositif de réception selon la revendication 10, **caractérisé en ce que** la première partie de boîtier (24) et la deuxième partie de boîtier (26) présentent chacune un pas de vis (36, 82) qui s'engagent l'un dans l'autre, de telle sorte que les deux parties de boîtier (24, 26) peuvent tourner l'une par rapport à l'autre.

12. Dispositif de réception selon l'une des revendications 10 ou 11, **caractérisé en ce que** sur une des parties de boîtier (24, 26) est agencé un dispositif de blocage (120) qui immobilise les parties de boîtier (24, 26) l'une contre l'autre.

13. Dispositif de réception selon la revendication 12, **caractérisé en ce que** le dispositif de blocage (120) présente une tige de verrouillage (122) qui s'engage dans un dispositif d'enclenchement (84) réalisé sur une des parties de boîtier (24, 26) pour empêcher ainsi une rotation relative des parties de boîtier (24, 26) l'une par rapport à l'autre.

14. Dispositif de réception selon l'une des revendications 5 à 13, **caractérisé en ce que** la chambre de lubrification (52) est étanchée par rapport au boîtier (22) au moyen d'organes d'étanchéité (66), au moins un organe d'étanchéité (66) étant agencé entre la butée (58) et le mandrin (14) et au moins un organe d'étanchéité (66) étant agencé entre le boîtier (22) et la douille (16).

15. Dispositif de réception selon l'une des revendications précédentes, **caractérisé en ce que** le dispositif de réception (10, 130) peut être raccordé à un vérin hydraulique (126), un piston (128) du vérin hydraulique (126) étant relié au mandrin (14) au moyen de l'écrou raccord (92), de telle sorte que le mandrin (14) est mobile en direction axiale (A).
